**Europäisches Patentamt**

**European Patent Office**

**Office européen des brevets**

(19)

(11) Veröffentlichungsnummer: **0 027 967**
**B1**

(12) **EUROPÄISCHE PATENTSCHRIFT**

(45) Veröffentlichungstag der Patentschrift:
01.02.84

(51) Int. Cl.³: **B 41 J 3/04**, G 03 F 1/00

(21) Anmeldenummer: 80106312.4

(22) Anmeldetag: 16.10.80

(54) Verfahren zum Darstellen eines Halbtonbildes.

(30) Priorität: 24.10.79 DE 2943018

(43) Veröffentlichungstag der Anmeldung:
06.05.81 Patentblatt 81/18

(45) Bekanntmachung des Hinweises auf die Patenterteilung:
01.02.84 Patentblatt 84/5

(84) Benannte Vertragsstaaten:
FR GB IT SE

(56) Entgegenhaltungen:
DE - B - 2 233 469
FR - A - 1 516 547
FR - A - 2 253 338
FR - A - 2 296 897
FR - A - 2 325 509
FR - A - 2 409 154
US - A - 3 604 846
US - A - 3 977 007

IBM TEHNICAL DISCLOSURE BULLETIN, Band 20, Nr. 2, Juli 1977, New York, US, D.W. ALBRECHT: "Multinozzle ink jet head with common bias", Seiten 760-761

(73) Patentinhaber: **SIEMENS AKTIENGESELLSCHAFT,
Berlin und München Wittelsbacherplatz 2,
D-8000 München 2 (DE)**

(72) Erfinder: **Heinzl, Joachim, Dr., Prof.,
Dreisesselbergstrasse 16, D-8000 München 90 (DE)**

## Verfahren zum Darstellen eines Halbtonbildes

Die Erfindung bezieht sich auf ein Verfahren zum Darstellen eines Halbtonbildes entsprechend dem Oberbegriff des Patentanspruchs 1.

Aus der FR-PS 1 516 547 ist ein Verfahren zum Darstellen eines Halbtonbilds bekannt, bei dem die Rasterpositionen von Bildpunkten in drei Vorzugsrichtungen darstellbar sind. Die Halbtonbilder werden bei diesem bekannten Verfahren jedoch nicht aus Bildpunkten gleicher Größe erzeugt, die in Bildflecken zusammengefaßt sind, sondern die Halbtonbilder entstehen durch eine unterschiedliche Größe der alle Rasterpositionen besetzenden Bildpunkte, wie es vom Zeitungsdruck allgemein bekannt ist.

Bei einer Darstellung von Halbtonbildern mit Hilfe von Bildpunkten gleicher Größe und gleicher Farbe ist es aus der US-PS 3 604 846 bekannt, diese Bildpunkte in einem Raster mit zwei Vorzugslinien, entsprechend den Richtungen eines rechtwinkeligen Koordinatensystems anzuordnen. Jeweils eine konstante Anzahl von Rasterpositionen kann zu einem Bildfleck konstanter Größe und Form zusammengefaßt werden. Die Anzahl der Bildpunkte in jedem Bildfleck legt die jeweilige Graustufe fest. Die Bildpunkte können innerhalb der Bildflecke statistisch oder nach einer vorgegebenen Regel entsprechend der jeweils darzustellenden Graustufe verteilt werden.

Bei einer Anordnung der Rasterpositionen in zwei Vorzugsrichtungen müssen die Bildpunkte einen verhältnismäßig großen Durchmesser aufweisen, damit eine vollständige Deckung erreicht wird, wenn alle Bildpunkte vorhanden sind. Weiterhin besteht bei einer derartigen Anordnung der Bildpunkte die Gefahr, daß bei bestimmten Grauwerten Moirémuster entstehen. Zur Erzeugung der Bildpunkte kann beispielsweise ein als Tintendruckkopf ausgebildeter Mosaikdruckkopf verwendet werden, wie er aus der FR-PS 2 325 509 bekannt ist.

Der Erfindung liegt daher die Aufgabe zugrunde, ein Verfahren zum Darstellen von Halbtonbildern anzugeben, bei dem bei einer gleichen Bildpunktteilung zum Erreichen des gleichen Deckungsgrads kleinere Bildpunkte verwendet werden können und bei dem die Entstehung von Moirémustern weitgehend vermieden wird.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß eine dichte Packung der Bildpunkte erreicht wird und bei einer gleichen Bildpunktgröße wie bei einem Raster mit zwei Vorzugsrichtungen eine erheblich bessere Deckung der Fläche mit Farbe erreicht wird. Durch die Anordnung der Bildpunkte wird eine bessere Bildqualität erreicht. Dies äußert sich beispielsweise darin, daß ein nach dem Verfahren gemäß der Erfindung erzeugter Graukeil bei einer Betrachtung aus einer geringeren Entfernung gleichmäßiger wirkt als ein Graukeil mit zwei Vorzugsrichtungen.

Um eine gleichmäßige Bildqualität über das ganze Halbtonbild zu erreichen, ist es nicht nur notwendig, die Bildpunkte innerhalb der Bildflecke in den drei Vorzugsrichtungen anzuordnen, sondern es erweist sich als zweckmäßig, wenn die Bildflecken derart aneinandergefügt sind, daß alle Bildpunkte in den drei Vorzugsrichtungen angeordnet sind.

Falls durch die Bildpunkte Halbtonbilder mit zehn Graustufen dargestellt werden sollen, ist es zweckmäßig, wenn jeweils neun benachbarte Rasterpositionen einen Bildfleck bilden, wenn die Bildflecken zeilenweise angeordnet sind und wenn die Bildflecken der jeweils benachbarten Zeilen um 1,5 Bildpunktteilungen versetzt angeordnet sind.

Bei einem vierstufigen Graukeil wird eine besonders gleichmäßige Verteilung der Bildpunkte erreicht, wenn jeweils drei unmittelbar benachbarte Rasterpositionen einen Bildfleck bilden, wenn die Bildflecken spaltenweise angeordnet sind und wenn die Bildflecken der jeweils benachbarten Spalten um eine Linie versetzt angeordnet sind.

Eine besonders einfache Struktur der Bildflecke wird erreicht, wenn jeweils sieben unmittelbar benachbarte Rasterpositionen einen Bildfleck bilden.

Um besonders gute Konturen der Halbtonbilder zu erreichen, ist es günstig, wenn bei angeschnittenen Bildflecken die verbleibenden Bildpunkte in der gleichen Belegung wie bei vollständigen Bildflecken dargestellt werden.

Im folgenden wird eine Durchführung des erfindungsgemäßen Verfahrens anhand von Zeichnungen näher erläutert. Es zeigt

Fig. 1 ein Schnittbild eines Tintendruckkopfs zum Darstellen von Halbtonbildern,

Fig. 2 eine Frontansicht einer Düsenplatte eines Tintendruckkopfs,

Fig. 3 eine Darstellung von Rasterpositionen mit zwei und drei Vorzugsrichtungen,

Fig. 4 eine Darstellung eines aus neun Bildpunkten gebildeten Bildflecks,

Fig. 5 eine Darstellung von mehreren Bildflecken, die zeilenweise angeordnet sind,

Fig. 6 eine Darstellung von mehreren Graukeilen,

Fig. 7 eine Darstellung von Rasterpositionen mit Bildflecken mit drei, vier, sieben und neun Bildpunkten.

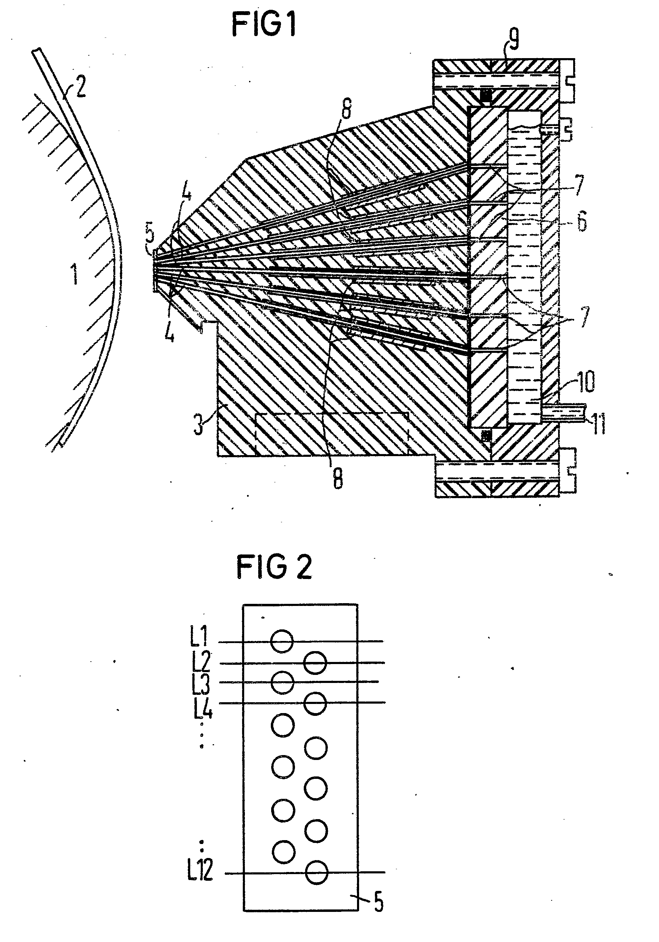

Der in Fig. 1 dargestellte Tintendruckkopf ist an einem Schreibwagen einer Schreibstation angeordnet und er bewegt sich längs einer Schreibwalze 1, um einen um diese gelegten Aufzeichnungsträger 2 zu bedrucken. Der Tintendruckkopf kann den Aufzeichnungsträger 2 sowohl mit alphanumerischen Zeichen als auch mit graphischen Mustern, wie Halbtonbildern bedrucken.

Der Tintendruckkopf besteht aus einem ersten Kunststoffteil 3, das mehrere Düsenkanäle 4 enthält. Beispielsweise enthält der Tintendruckkopf zwölf Düsenkanäle 4, die in zwei Ebenen angeordnet sind, wovon in der Fig. 1 nur die einer Ebene dargestellt sind. Die Düsenkanäle 4 laufen in den beiden Ebenen strahlenförmig auseinander. Sie enden auf der einen Seite in einer Düsenplatte 5, die zwölf Düsen enthält, aus denen Tintentröpfchen auf parallelen Bahnen zum Aufzeichnungsträger 2 gelangen. An den anderen Enden der Düsenkanäle ist eine Drosselplatte 6 vorgesehen, die enge Kanäle 7 aufweist, über die Tinte den Düsenkanälen 4 zugeführt wird. Die Düsenkanäle 4 werden konzentrisch von piezokeramischen Wandlern 8 umschlossen. Beim Anlegen einer Spannung an einen oder mehrere der Wandler 8 wird in dem entsprechenden Düsenkanal 8 eine Stoßwelle erzeugt und über die Düsenplatte 5 werden aus den entsprechenden Düsen Tintentröpfchen ausgestoßen. Über eine in einem zweiten Kunststoffteil 9 vorgesehene Vorratskammer 10 werden die Düsenkanäle 4 mit der Tinte versorgt. Die Vorratskammer 10 ist über eine Versorgungsleitung 11 mit einem Tintenbehälter verbunden, der hinter dem Tintendruckkopf angeordnet ist.

Bei der Darstellung von alphanumerischen Zeichen werden die Wandler 8 in Abhängigkeit von Signalen betätigt, die von in der Schreibstation angeordneten Zeichengeneratoren ausgegeben werden. Bei der Darstellung von graphischen Mustern, wie Halbtonbildern, werden die Wandler 8 entweder ebenfalls von Signalen angesteuert, die von einem Speicher abgegeben werden, in dem die graphischen Muster oder Halbtonbilder gespeichert sind oder die über eine Übertragungsstrecke, ähnlich einer Faksimileübertragung übertragen werden.

Die in Fig. 2 dargestellte Düsenplatte 5 des Tintendruckkopfs weist zwölf Düsen auf, die den in den beiden Ebenen angeordneten Düsenkanälen 4 zugeordnet sind. Um einen geringen Abstand der Düsen in vertikaler Richtung zu erreichen, sind diese in bekannter Weise versetzt angeordnet.

Bei einer Darstellung von Halbtonbildern werden diese aus Bildpunkten konstanter Größe gebildet. Die Bildpunkte sind auf parallelen Linien L1 bis L12 angeordnet, die jeweils einer Düse des Tintendruckkopfs zugeordnet sind. Während der Bewegung des Tintendruckkopfs längs der Schreibwalze 1 werden die Bildpunkte nebeneinander auf den Aufzeichnungsträger 2 gedruckt. Nach jeder Bewegung des Tintendruckkopfs längs der Schreibwalze 1 wird der Aufzeichnungsträger 2 durch eine Bewegung der Schreibwalze 1 senkrecht zur Druckrichtung in Hauptvorschubrichtung um eine Strecke verschoben, die den Linien L1 bis L12 entspricht. Auf diese Weise wird auf dem Aufzeichnungsträger 2 ein lückenloses Halbtonbild dargestellt.

Die Graustufen des Halbtonbilds werden durch die Anzahl der gedruckten Bildpunkte pro Flächeneinheit dargestellt. Die Bildpunkte sind in einer immer wiederkehrenden Struktur zusammengefaßt. Diese Struktur, die aus n Bildpunkten aufgebaut ist, heißt Bildfleck. Innerhalb einer Graustufe sind mehrere gleiche Bildflecken zusammengefaßt. Die Bildflecken einer Stufe enthalten alle die gleiche Anzahl von Bildpunkten. Die nullte Stufe ist weiß, sie enthält pro Bildfleck null Punkte. Die n-te Stufe enthält die maximal mögliche Anzahl von n Bildpunkten pro Bildfleck und hat damit die maximal mögliche Bedeckung der Fläche mit Bildpunkten. Die Verteilung der Bildpunkte in Abhängigkeit von den darzustellenden Grauwerten wird so gewählt, daß sie einerseits innerhalb der Bildflecke und andererseits im Verband mit den benachbarten Bildflecken möglichst gleichmäßig ist, so daß die Bildung von Moirémustern weitgehend vermieden wird. Zweckmäßigerweise erfolgt die Belegung der Bildpunkte in allen Bildflecken nach der gleichen Regel.

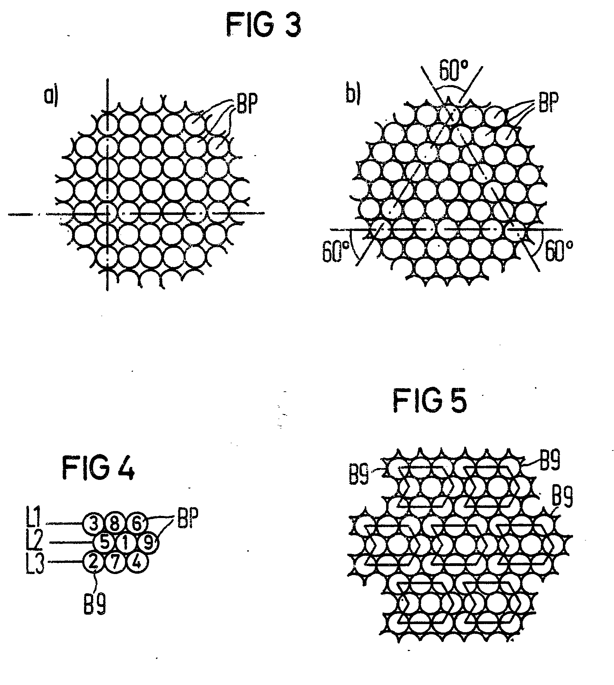

Die Fig. 3 zeigt mögliche Anordnungen von Bildpunkten BP in verschiedenen Rastern. Unter a sind die Rasterpositionen eines bekannten Rasters dargestellt. Bei diesem Raster sind die Bildpunkte BP mit zwei Vorzugsrichtungen entlang horizontaler und vertikaler Linien zueinander angeordnet. Bei diesem Raster ist keine volle Bedeckung der Fläche mit Farbe möglich, wenn an allen Rasterpositionen Bildpunkte BP auftreten und sich diese gerade berühren.

Das unter b dargestellte erfindungsgemäße Raster weist drei Vorzugsrichtungen für die Rasterpositionen auf. Die Bildpunkte BP liegen dichtest gepackt nach dem Prinzip von Bienenwaben auf den Eckpunkten von gleichseitigen Dreiecken. Bei gleicher Größe der Bildpunkte BP wie bei a wird bei diesem Prinzip eine erheblich bessere Bedeckung mit Farbe erreicht.

Der in Fig. 4 dargestellte Bildfleck B9, der aus neun Bildpunkten BP gebildet wird, kann als Ausschnitt aus dem in Fig. 3 unter b dargestellten Raster angesehen werden. Die Bezifferung der Bildpunkte BP gibt an, in welcher Reihenfolge bei einer Erzeugung von verschiedenen Graustufen die einzelnen Rasterpositionen im Bildfleck B9 belegt werden, um die möglichen 0 bis n=9 Graustufen zu erzielen. In der nullten Graustufe sind pro Bildfleck B9 null Bildpunkte BP enthalten. Diese Graustufe ist weiß. Bei der ersten Graustufe ist pro Bildfleck B9 ein Bildpunkt BP enthalten und zwar an der mit 1 gekennzeichneten Stelle. In der zweiten Graustufe sind pro Bildfleck B9 der erste und zweite Bildpunkt enthalten. Bei der neunten Graustufe (schwarz) sind in jedem Bildfleck B9 alle Rasterpositionen mit Bildpunkten BP belegt.

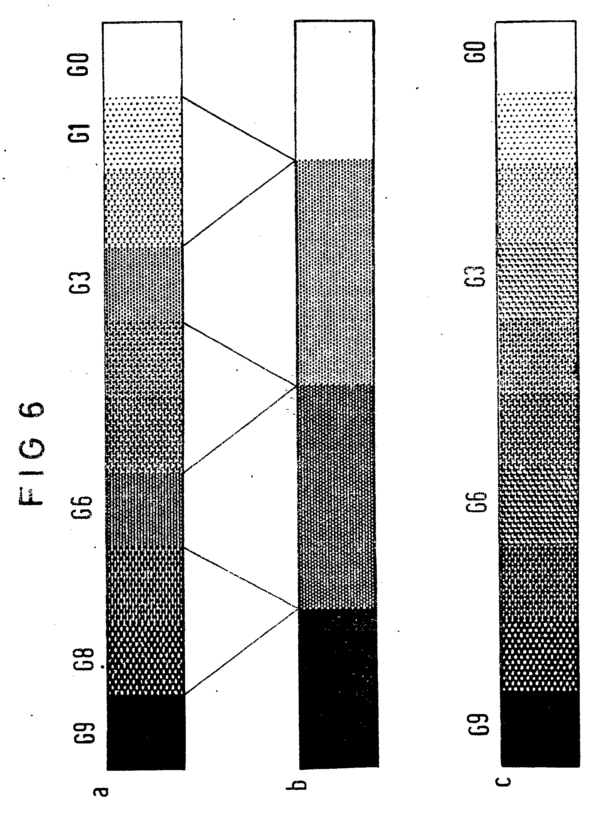

Bei der Darstellung von Rasterpositionen in Fig. 5 sind die Bildflecken B9 so aneinandergefügt, daß das Prinzip der drei Vorzugsrichtungen auch hierbei erfüllt ist. Ein auf diese Weise erzeugter zehnstufiger Graukeil mit den Graustufen G0 bis G9 ist in Fig. 6 unter a dargestellt.

Bei der Darstellung des Graukeils in Fig. 6 fällt auf, daß die Graustufen G0 (weiß), G3, G6 und G9 (schwarz) eine besonders homogene Punktverteilung aufweisen. Begnügt man sich mit diesen vier Graustufen, die zueinander im Graukeil in gleichen Abständen liegen, kann man einen sehr gleichmäßigen Graukeil herstellen, der unter b in Fig. 6 dargestellt ist. Dieser Graukeil läßt sich auch auf einen Bildfleck B3 mit drei Bildpunkten zurückführen, wobei die Bildpunkte auf den Ecken eines gleichseitigen Dreiecks liegen.

Will man den zehnstufigen Graukeil, der in Fig. 6 unter a dargestellt ist, noch verbessern, ist es sinnvoll, die besonders guten Graustufen G3 und G6, die für das Auge zu früh verschwimmen und daher beim Gesamteindruck herausfallen, künstlich zu verschlechtern. Dies kann besonders einfach dadurch entstehen, daß man die Reihenfolge 3 und 4 sowie 6 und 7 in der Belegung des Bildflecks B9 durch die Bildpunkte BP vertauscht. Das Ergebnis ist ein gleichmäßiger Graukeil, in dem alle Graustufen etwa in gleicher Entfernung für das Auge verschwimmen. Dieser Graukeil ist in Fig. 6 unter c dargestellt.

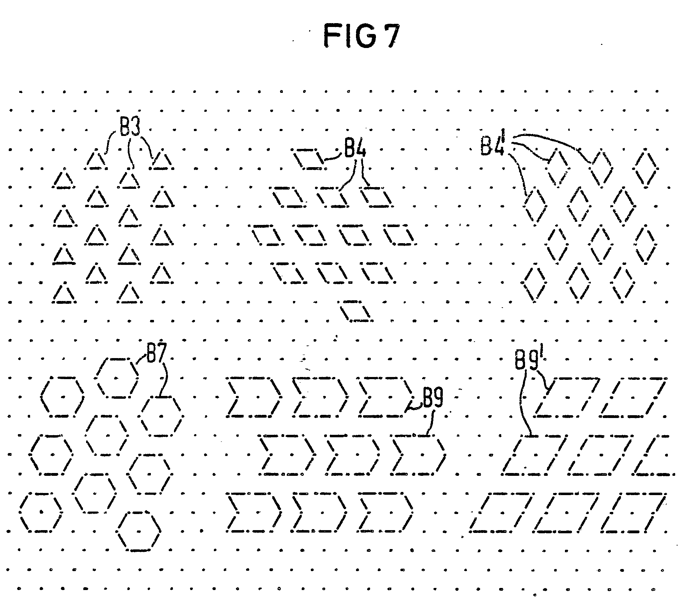

Bei der Darstellung in Fig. 7 sind für eine größere Fläche die Mittelpunkte von möglichen Bildpunkten BP aufgezeichnet. Diese Mittelpunkte stellen die Rasterpositionen dar und sie liegen unter den obengenannten drei Vorzugsrichtungen zueinander. Man kann erkennen, daß sich in dieser Fläche eine unterschiedliche Anzahl von n Bildpunkten zu Strukturen zusammenfassen lassen, die einen Aufbau der Fläche aus den obengenannten Bildflecken ermöglichen. Die mit B3 bezeichneten Bildflecken werden aus jeweils drei unmittelbar benachbarten Rasterpositionen gebildet. Sie sind spaltenförmig angeordnet und die Bildflecken der benachbarten Spalten sind jeweils um eine Linie versetzt angeordnet. Ein aus diesen Bildflecken gebildeter Graukeil entspricht dem in Fig. 6 unter b dargestellten Graukeil. Die mit B4 und B4' bezeichneten Bildflecken werden jeweils aus vier Rasterpositionen gebildet, die rautenförmig angeordnet sind. Mit Hilfe dieser Bildflecken läßt sich ein fünfstufiger Graukeil herstellen. Mit B7 sind Bildflecken bezeichnet, die jeweils aus sieben einander unmittelbar benachbarten Rasterpositionen gebildet werden. Unter Verwendung dieser Bildflecken B7 ist ein achtstufiger Graukeil erzeugbar.

Die mit B9 bezeichneten Bildflecken entsprechen den in Fig. 4 bzw. Fig. 5 dargestellten Bildflecken, mit denen die in Fig. 6 unter a und c dargestellten Graukeile darstellbar sind. Diese Bildflecken B9 sind zeilenweise angeordnet, wobei jede Zeile aus drei Linien besteht. Die Bildflecken der jeweils benachbarten Zeilen sind um 1,5 Bildpunktteilungen versetzt angeordnet. Eine weitere Möglichkeit der Zusammenfassung von neun Rasterpositionen zu Bildflecken ist durch die Bildflecken B9' dargestellt.

Neben den dargestellten Bildflecken läßt sich eine Vielzahl von weiteren Bildflecken darstellen, wobei das Wesentliche der Bildflecken darin besteht, daß von einem bestimmten Bildpunkt in einem Bildfleck der jeweils entsprechende Bildpunkt in den sechs unmittelbar benachbarten Bildflecken jeweils den gleichen Abstand hat. Die entsprechenden Bildpunkte der unmittelbar benachbarten Bildflecken bilden somit jeweils die Eckpunkte eines Sechsecks, in dessen Mittelpunkt der jeweilige bestimmte Bildpunkt eines Bildflecks angeordnet ist.

Bei der Ermittlung von weiteren Bildfleckgrößen wird davon ausgegangen, daß in ein Raster mit drei Vorzugsrichtungen unter 60°, wie es in Fig. 7 dargestellt ist, beliebig viele gleichseitige Sechsecke eingeordnet werden können. Mit zunehmender Größe der Sechsecke ergeben sich jeweils auch größere Bildflecken. Die Anzahl n von Bildpunkten eines Bildflecks kann nach folgender Gleichung ermittelt werden:

$$n = (a + k \cdot 0,5)^2 + 3 \cdot (b + k \cdot 0,5)^2.$$

k kann die Werte 0 oder 1 annehmen, während a und b die Werte 0, 1, 2 ... ∞ annehmen können.

Eine wesentliche Grundregel bei der Belegung eines Bildflecks mit Bildpunkten ist es, daß eine vorgegebene Reihenfolge streng eingehalten wird. Beispielsweise müssen die Bildpunkte 1 der ersten Graustufe G1 auch bei höheren Graustufen an genau der ihnen zugeordneten Stelle sitzen, also für höhere Stufen nur weitere Bildpunkte hinzugefügt werden. Für eine bestimmte Graustufe sollen die Bildflecken nicht willkürlich neu verteilt werden. Der Grund für diese Regel liegt darin, daß die Grenze zwischen zwei Graustufen zur Erhöhung der Auflösung auch quer durch einen Bildfleck verlaufen soll. Bei Beachtung der Regel erfolgt ein klarer Übergang von der einen Graustufe in die andere. Andernfalls wäre es möglich, daß es an der Grenze zu Häufungen oder zu einem Mangel an Bildpunkten kommt. Zur besseren Darstellung einer Kontur kann es auch vorteilhaft sein, daß bei angeschnittenen Bildflecken die verbleibenden Bildpunkte in der gleichen Weise wie bei vollständigen Bildflecken belegt werden und daß die außerhalb der Kontur liegenden Bildpunkte weggelassen werden.

Mit Hilfe des in den Fig. 1 und 2 dargestellten Tintendruckkopfs, der die Bildpunkte in zwölf Linien gleichzeitig drucken kann, werden beispielsweise bei einer Verwendung von aus neun Bildpunkten BP gebildeten Bildflecken B9 jeweils die Bildflecken von vier Zeilen gleichzeitig gedruckt. In entsprechender Weise werden bei der Verwendung von Bildflecken mit einer anderen Anzahl von Bildpunkten entsprechend viele Bildflecken oder Teile davon bei einer Bewegung des Druckkopfs gedruckt.

Anstelle des Tintendruckkopfs kann auch ein an sich bekannter Nadeldruckkopf verwendet werden, bei dem die Druckelemente durch Druckernadeln dargestellt werden, die mit Hilfe von Magneten gegen den Aufzeichnungsträger gedrückt werden. Es ist auch denkbar, andere Druckköpfe, die von Mosaikdruckwerken bekannt sind und beispielsweise mit elektrosensitivem oder wärmeempfindlichem Papier arbeiten, zur Darstellung von Halbtonbildern nach dem angegebenen Verfahren zu verwenden. Auch ist eine derartige Darstellung von Halbtonbildern mit Hilfe von Anzeigeelementen, wie beispielsweise Flüssigkristall- oder Plasmaanzeigeelementen möglich.

**Patentansprüche**

1. Verfahren zum Darstellen eines Halbtonbildes, bei dem das aus Graustufen gebildete Halbtonbild aus Bildpunkten gleicher Größe erzeugt wird, die innerhalb von Bildflecken gleicher Größe auf vorgegebenen Rasterpositionen angeordnet sind, und bei dem die Anzahl der besetzten Bildpunkte innerhalb der Bildflecken die jeweilige Graustufe bestimmt, dadurch gekennzeichnet, daß die Rasterpositionen drei Vorzugsrichtungen aufweisen, daß jede Rasterposition von sechs unmittelbar benachbarten Rasterpositionen umgeben ist und von diesen Rasterpositionen den gleichen Abstand hat, und daß die jeweils einer bestimmten Graustufe (G0 bis G9) zugeordneten Bildpunkte (BP) von entsprechenden besetzten Bildpunkten (BP) in sechs unmittelbar benachbarten Bildflecken (B3, B4, B7, B9) den gleichen Abstand haben.

2. Verfahren nach Anspruch 1, dadurch gekennzeichnet, daß die Bildflecken (B3, B4, B7, B9) derart aneinandergefügt sind, daß alle Bildpunkte (BP) in den drei Vorzugsrichtungen angeordnet sind.

3. Verfahren nach Anspruch 1 oder Anspruch 2, dadurch gekennzeichnet, daß jeweils neun benachbarte Rasterpositionen einen Bildfleck (B9) bilden, daß die Bildflecken (B9) zeilenweise angeordnet sind und daß die Bildflecken (B9) der jeweils benachbarten Zeilen um 1,5 Bildpunktteilungen versetzt angeordnet sind.

4. Verfahren nach Anspruch 1 oder Anspruch 2, dadurch gekennzeichnet, daß jeweils drei unmittelbar benachbarte Rasterpositionen einen Bildfleck (B3) bilden, daß die Bildflecken (B3) spaltenweise angeordnet sind und daß die Bildflecken (B3) der jeweils benachbarten Spalten um eine Linie versetzt angeordnet sind.

5. Verfahren nach Anspruch 1 oder Anspruch 2, dadurch gekennzeichnet, daß jeweils sieben unmittelbar benachbarte Rasterpositionen einen Bildfleck (B7) bilden.

6. Verfahren nach einem der Ansprüche 1 bis 5, dadurch gekennzeichnet, daß bei angeschnittenen Bildflecken (B3, B4, B7, B9) die verbleibenden Bildpunkte (BP) in der gleichen Belegung wie bei vollständigen Bildflecken (B3, B4, B7, B9) dargestellt werden.

**Claims**

1. A method of representing a half-tone image, in which the half-tone image made up of grey values, is produced from image points of equal size which are arranged within equal sized image spots at predetermined grid positions, and in which the number of image points occupied within the image spots determines the particular grey value, characterised in that the grid positions have three preferred directions; that each grid position is surrounded by six directly adjacent grid positions and is equispaced from these grid positions; and that the image points (BP) which are respectively assigned to a particular grey value (G0 to G9) are at the same distance from corresponding occupied image points (BP) in six directly adjacent image spots (B3, B4, B7, B9).

2. A method according to Claim 1, characterised in that the image spots (B3, B4, B7, B9) are joined to one another in such a way that all the image points (BP) are arranged in the three preferred directions.

3. A method according to Claim 1 or Claim 2, characterised in that nine adjacent grid positions in each case form one image spot (B9); that the image spots (B9) are arranged in rows; and that the image spots (B9) of adjacent rows are offset by 1.5 image point spacings.

4. A method according to Claim 1 or Claim 2, characterised in that three directly adjacent grid positions in each case form one image spot (B3); that the image spots (B3) are arranged in columns; and that the image spots (B3) of adjacent clumns are offset by one line.

5. A method according to Claim 1 or Claim 2, characterised in that seven directly adjacent grid positions in each case form one image spot (B7).

6. A method according to one of Claims 1 to 5, characterised in that, with cut picture spots (B3, B4, B7, B9), the remaining image points (BP) are represented in the same lay-out as with complete image spots (B3, B4, B7, B9).

**Revendications**

1. Procédé pour représenter une image en demiteinte, dans lequel l'image en demi-teinte formée par des échelons de gris est produite par des points d'image de même grosseur qui sont disposés suivant des positions de réseau prédéterminées à l'intérieur de zones d'image de même grosseur, et dans lequel le nombre de points d'image occupés à l'intérieur des zones d'image détermine l'échelon de gris respectif, caractérisé par le fait que les positions de réseau présentent trois directions préférentielles, que chaque position de réseau est entourée par six positions de réseau immédiatement voisines et est située à la même distance de ces positions de réseau, et que les points d'image (BP) respectivement associés à un échelon de gris déterminé (G0 à G9) sont situés à la même distance de points d'image occupés correspondants (BP) dans six zones d'image immédiatement voisines (B3, B4, B7, B9).

2. Procédé suivant la revendication 1, caractérisé par le fait que les zones d'image (B3, B4, B7, B9) sont aboutées de manière que tous les points d'image (BP) soient disposés suivant les trois directions préférentielles.

3. Procédé suivant la revendication 1 ou la revendication 2, caractérisé par le fait que neuf positions de réseau voisines forment respectivement une zone d'image (B9), que les zones d'image (B9) sont disposées par lignes, et que les zones d'image (B9) des lignes respectivement voisines sont disposées en étant décalées de 1,5 pas de points d'image.

4. Procédé suivant la revendication 1 ou la revendication 2, caractérisé par le fait que trois positions de réseau immédiatement voisines forment respectivement une zone d'image (B3), que les zones d'image (B3) sont disposées par colonnes, et que les zones d'image (B3) des colonnes respectivement voisines sont disposées en étant décalées d'une droite.

5. Procédé suivant la revendication 1 ou la revendication 2, caractérisé par le fait que sept positions de réseau immédiatement voisines forment respectivement une zone d'image (B7).

6. Procédé suivant l'une des revendications 1 à 5, caractérisé par le fait que dans le cas de zones d'image coupées (B3, B4, B7, B9) les points d'image restants (BP) sont représentés dans la même position que dans le cas de zones d'image complètes (B3, B4, B7, B9).

## FIG 1

## FIG 2

# FIG 3

a)

BP

b)

60°

BP

60°

60°

# FIG 4

L1 ——⊚③⊚⑧⊚⑥ ——BP

L2 —— ⊚⑤⊚①⊚⑨

L3 —— ⊚②⊚⑦⊚④

B9

# FIG 5

B9

B9

B9

FIG 6

## FIG 7